# EUROPEAN PATENT SPECIFICATION

(11) **EP 2 607 037 B1**
(45) Date of publication and mention of the grant of the patent: **05.04.2017**
(21) Application number: 12198331.6
(22) Date of filing: 20.12.2012
(51) Int. Cl.: B29C 47/10, B29C 47/36, B29C 47/40

(54) **Apparatus for mixing rubber compounds**
Vorrichtung zum Mischen von Gummizusammensetzungen
Appareil pour mélanger des composés de caoutchouc

(30) Priority: 22.12.2011 US 201113334196
(43) Date of publication of application: 26.06.2013
(73) Proprietor: The Goodyear Tire & Rubber Company, Akron, OH 44316-0001 (US)
(72) Inventor: Milan, Marie-Laure Stéphanie, L-2215 Luxembourg (LU); Linster, Tom Dominique, L-9370 Gilsdorf (LU); Knepper, Jean-Claude, L-9161 Ingeldorf (LU); Burg, Gary Robert, Massillon, OH Ohio 44646 (US); Endres, Christian, 200122 Pudong Shanghai (CN); De Monte, Patrice, B-6700 Arlon (BE)
(74) Representative: Kutsch, Bernd

(56) References cited:
- EP-A1- 0 490 056
- EP-A1- 2 039 492
- EP-A2- 2 338 655
- WO-A1-97/09162
- WO-A1-03/024683
- WO-A1-2010/073275
- DE-A1- 1 954 214
- DE-A1- 10 050 295
- JP-A- 2004 216 725
- US-A1- 2002 093 118
- US-A1- 2006 293 457

## Description

### Field of the Invention

The present invention relates in general to the manufacturing of rubber compounds as used in tire manufacturing, and more particularly to a mixing apparatus for the manufacturing of rubber compounds using a plurality of multiple shaft extruder devices.

### Background of the Invention

Tire manufacturers have progressed to more complicated designs due to an advance in technology as well as a highly competitive industrial environment. In particular, tire designers seek to use multiple rubber compounds in a tire in order to meet customer demands. Using multiple rubber compounds per tire can result in a huge number of required compounds for the various tire lines of the manufacturer. For cost and efficiency reasons, tire manufacturers seek to limit the number of compounds required due to the extensive costs associated with each compound. Each compound typically requires the use of a Banbury mixer, which involves expensive capital expenditures. Furthermore, Banbury mixers have difficulty mixing up tough or very stiff rubber compounds. The compounds generated from the Banbury mixers are typically shipped to the tire building plants, thus requiring additional costs for transportation. The shelf life of the compounds is finite; and if not used within a certain time period, the compounds are scrapped.

Thus an improved method and apparatus is desired which substantially reduces the need for the use of Banbury mixers while providing an apparatus and methodology to provide custom mixing. It should be possible to prepare both non-productive compounds and productive compounds. It is further desired to have a system at the tire building machine which provides for the ability to manufacture customizable compounds. Yet an additional problem to be solved is to generate the compounds continuously at the tire building machine.

US 2011/0146883 A1, US 2011/0146884 A1, US 2011/0146885 A1 and US 2011/0146888 A1 describe various approaches to mixing rubber compounds using an extruder device together with a subsequent gear pump extruder device. The extruder device may be a pin type extruder, a twin screw extruder, a single screw extruder or a ring type extruder. The extruder device is fed with a pre-mixed rubber compound and compounded in the extruder device with additives.

WO 2010/073275 A1 and US 2011/01467800 A1 describe a process and a device for producing an elastomeric compound. The process uses a continuous mixing device such as a multiple screw extruder or a ring extruder together with a batch mixing device. A compound is first mixed in a Banbury, discharged from the Banbury and then fed into the continuous mixing device.

US 2004/0094862 A1, US 2007/0121421 A1 and US 2011/0110178 A1 describe in further detail multiple screw extruder devices (also called multiple shaft extruder devices) as they can be used in the production of elastomeric compounds.

Multiple shaft extruder devices and their use to manufacture rubber compounds are described in US 2006/0293457 A1, EP 2 338 655 A2, DE 100 50 295 A1, WO 03/024683 A1, WO 97/09162 A1, DE 19 54 214 A1, EP 0 490 056 A1, US 2002/093118 A1 and EP 2 039 492 A1.

### Summary of the Invention

The invention is an apparatus in accordance with claim 1.

In one aspect of the present invention, the multiple shaft extruder device may be a ring extruder device comprising at least six parallel screws, alternatively at least 8 or at least parallel 12 screws, jointly turning clockwise or counterclockwise in the same or different directions.

The polymer raw material used may be a liquid polymer raw material, a mixture of liquid polymer raw materials, a polymer raw material in the shape of pellets or granules, a mixture of granules or pellets of at least two different polymer raw materials, a polymer raw material in the shape of a powder, a mixture of at least two different polymer raw material powders, a polymer raw material derived from in-situ polymerization, a recycled polymer raw material, a reclaimed polymer raw material, or a depolymerized polymer raw material.

The at least one further raw material used may be selected from the group consisting of a filler material such as rubber reinforcing carbon black, silica or a platy filler such as clay; a coupling agent; a tackifier resin; a reinforcing resin; a processing aid; an antioxidant; an antiozonant; a stearic acid; an activator; a wax; an oil; a vulcanizing agent such as a sulfur vulcanizing agent; a peptizing agent; and a mixture of one or more of these materials.

A plurality of different polymer raw materials may be fed into the multiple shaft extruder device.

The at least one further raw material may be a further polymer raw material or a mixture of at least two further different polymer raw materials.

The multiple shaft extruder device may be fed with the at least one polymer raw material or with the mixture of different polymer raw materials and with one or more further raw materials but exclusive of pre-mixed rubber compounds.

The multiple shaft extruder device comprises an outlet at the end of the multiple shaft extruder device and a plurality of inlets along the shaft of the multiple shaft extruder device including a first inlet being the inlet which is most distant from the outlet, wherein the inlets of the plurality of inlets are located at different respective distances with respect to the outlet. The at least one polymer raw material or the mixture of at least two different polymer raw materials and the at least one further raw material can be fed into the multiple shaft extruder device through the plurality of inlets.

The at least one polymer raw material or the mixture of at least two different polymer raw materials may be fed into the multiple shaft extruder device through the first inlet and the further raw materials may be fed into the multiple shaft extruder device through the further inlets of the plurality of inlets. Alternatively, the least one polymer raw material or the mixture of at least two different polymer raw materials and the further raw materials may be fed into the multiple shaft extruder device through a single inlet.

The mixing in the multiple shaft extruder device is followed by a further mixing step in any other known mixing device such as a further multiple shaft extruder device, a ring extruder device, a twin-screw extruder device, or a gear pump device.

The extruded rubber compound may be in the form of a pelletized or granulated rubber compound.

A process of manufacturing a rubber compound is disclosed, the process comprising a plurality of multiple shaft extruder devices; feeding at least one of the multiple shaft extruder devices with at least one polymer raw material or a mixture of different polymer raw materials; feeding each of the multiple shaft extruder devices with at least one material; operating the plurality of multiple shaft extruder devices in parallel and mixing in each of the multiple shaft extruder devices a respective rubber compound; and extruding the respective rubber compounds from each of the multiple shaft extruder devices.

This process includes mixing the respective rubber compounds extruded from each of the multiple shaft extruder devices in a subsequent mixing device such as a subsequent multiple shaft extruder device, or feeding the respective rubber compounds extruded from each of the multiple shaft extruder devices to a common gear pump device.

In accordance with the invention, a mixing apparatus for manufacturing a rubber compound is provided, the mixing apparatus comprising a plurality of multiple shaft extruder devices each comprising a plurality of inlets for receiving a plurality of materials to be fed into the respective extruder device and an outlet for discharging a mixed material extruded by the respective extruder device, wherein the multiple shaft extruder devices are arranged to operate in parallel in such a way that operatively the extrudates of the plurality of multiple shaft extruder devices are fed together into the inlet of at least one further mixing device, which is a multiple shaft extruder device or a gear pump mixing device.

In one aspect of the invention, each of the plurality of multiple shaft extruder devices may be a ring extruder device. Each such ring extruder device may comprise at least six parallel screws, alternatively at least 8 or at least parallel 12 screws, jointly turning clockwise or counterclockwise in the same or different directions.

In one aspect of the invention, two or three or more multiple shaft extruder devices may be arranged to operate in parallel.

In one aspect of the invention, at least one feeding gear pump may be provided which is arranged in such a way that it operatively feeds at least one of the plurality of multiple shaft extruder devices with at least one material.

Each of the plurality of the multiple shaft extruder devices comprises an outlet at the downstream end of the respective multiple shaft extruder device and a plurality of inlets along a shaft of the respective multiple shaft extruder device. The inlets of the plurality of inlets are located at different respective distances with respect to the respective outlet.

### Definitions

"Polymer raw material" means a rubber material or a polymer material which can be compounded to a rubber composition (also referred to as an elastomeric composition) but which is exclusive of (or at least essentially exclusive of) a filler such as carbon black, silica or a platy filler, a coupling agent, a tackifier resin, a reinforcing resin; a processing aid, an antioxidant, an antiozonant, a stearic acid, an activator, a wax, an oil, a sulfur vulcanizing agent and a peptizing agent. The term "polymer raw material" however includes such a rubber material or a polymer material that comprises a mineral separating agent such as calcium carbonate or silica powder in an amount of up to 15% in weight of the rubber or polymer material.

"Productive compound" means a rubber compound that includes accelerators, sulfur and other materials needed to cure the rubber.

"Non-productive compound" means a rubber compound that does not have one or more of the following items: 1) accelerator; 2) sulfur; or 3) curing agent(s).

### Brief Description of the Drawings

The invention will be described by way of example and with reference to the accompanying drawings in which:
FIG. 1 is a schematic of a mixing apparatus usable in a comparative example;
FIG. 2 is a schematic of a mixing apparatus usable in a further comparative example;
FIG. 3 is a schematic of a mixing apparatus in accordance with an embodiment of the present invention; and
FIG. 4 is a schematic of a mixing apparatus similar to the mixing apparatus of Fig. 1 but showing some more details.

### Detailed Description of the Invention

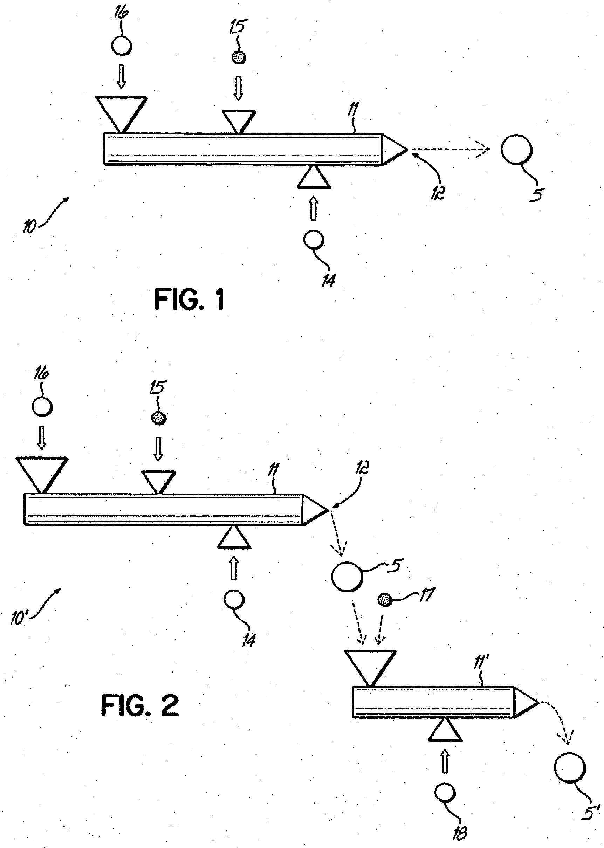

Figure 1 illustrates a comparative example of a method and a mixing apparatus 10 for a continuous mixing and preparing rubber compositions for tires or tire components. The use of the mixing apparatus 10 is not limited to tire applications and may be used, for example, to make other rubber components not related to tires such as conveyors, hoses or belts. The mixing apparatus 10 may be positioned at the tire building machinery for direct application of the rubber composition to a tire building drum, to another tire building apparatus, or to a substrate in general.

Figure 1 illustrates a mixing apparatus 10 for a continuous mixing process which includes a multiple shaft extruder device 11. The multiple shaft extruder device 11 has an inlet for feeding the multiple shaft extruder device 11 with a first raw material 16 in the form of a polymer raw material or a mixture of at least two different polymer raw materials. The multiple shaft extruder device 11 has a further inlet for feeding the multiple shaft extruder device 11 with a second raw material 15 (or a mixture of raw materials) and a third raw material 14 (or a mixture of raw materials). In an alternative design, the multiple shaft extruder device 11 may also have only one inlet (or only two inlets) for feeding it. In this case, the various raw materials 16, 15, 14 may be fed together into the multiple shaft extruder device 11 using this one inlet (or these two inlets).

The polymer raw material is a rubber material which can be compounded to a rubber composition (also referred to as an elastomeric composition) but which is exclusive of or at least substantially exclusive of a filler such as carbon black, silica or a platy filler, a coupling agent, a tackifier resin, a reinforcing resin; a processing aid, an antioxidant, an antiozonant, a stearic acid, an activator, a wax, an oil, a sulfur vulcanizing agent, and a peptizing agent. The polymer raw material may, however, comprise a separating agent, preferably calcium carbonate or silica powder, in an amount of up to 15%, preferably 2% to 10%, or between 5% to 10%, in weight of the respective polymer raw material. Such separating agent is particularly useful when the polymer raw material is granulated or pelletized. Preferably, the polymer raw material is a granulated or pelletized polymer raw material comprising up to 15% of a separating agent such as calcium carbonate or silica powder.

The second and third raw material(s) may include a filler material such as carbon black, silica or a platy filler, a coupling agent, a tackifier resin, a reinforcing resin; a processing aid, an antioxidant, an antiozonant, a stearic acid, an activator, a wax, an oil, a sulfur vulcanizing agent, and a peptizing agent. The multiple shaft extruder device 11 mixes a rubber compound 5 which is extruded through the outlet 12. Preferably, the mixed rubber compound 5 is a productive compound, i.e., a rubber compound that includes accelerators, sulfur and other materials needed to cure the rubber. It may, however, also be a non-productive compound, i.e. a rubber compound that does not have one or more of the following items: 1) accelerator; 2) sulfur; or 3) curing agent(s). Such a non-productive compound requires a further mixing step as further explained below.

In one aspect, the multiple shaft extruder device 11 may have a design as basically shown in US-A-2006/0140048 (see in particular Figs. 1-4).

The extruder device warms the mixed materials to the temperature in the range of 80°C to 200°C, preferably 80°C to 150°C, and masticates them as needed.

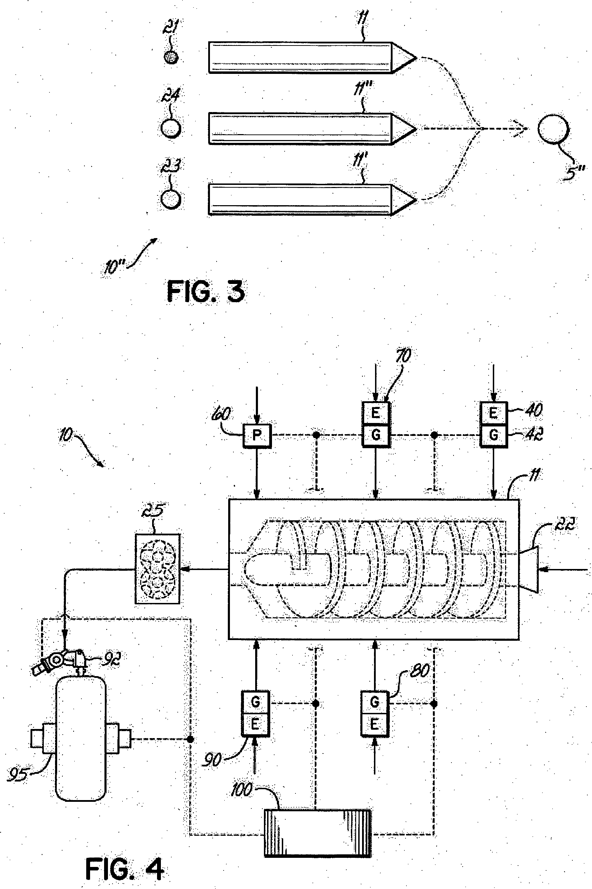

Downstream of the multiple shaft extruder device 11, a gear pump extruder device 25 may be provided as further explained with Fig. 4. The mixed rubber compound 5 is fed into this gear pump extruder device 25.

Figure 2 illustrates a second comparative example of a method and a mixing apparatus 10' for a continuous mixing suitable for use for making rubber compositions for tires or tire components. The mixing apparatus 10' is, however, again not limited to tire applications and may be used, for example, to make other rubber components not related to tires such as conveyors, hoses or belts. The mixing apparatus 10' may again be located at the tire building machinery for direct application of the rubber composition to a tire building drum, to another tire building apparatus, or to a substrate in general.

The embodiment of Fig. 2 differs from the embodiment of Fig. 1 in that it comprises the first multiple shaft extruder device 11 of Fig. 1 and a second multiple shaft extruder device 11' which may be of the same or a similar design as the first multiple shaft extruder device 11. The devices 11, 11' operate sequentially, i.e., the mixed rubber compound 5 exiting the outlet 12 is fed into the second multiple shaft extruder device 11'. In this embodiment, the mixed rubber compound is preferably a non-productive compound.

The multiple shaft extruder device 11' may include an inlet for the extruded mixed rubber compound 5 and preferably also one or more further inlets for feeding the multiple shaft extruder device 11' with a fourth raw material 17 (or a mixture of raw materials) and optionally also a fifth raw material 18 (or a mixture of raw materials). The fourth or fifth raw material 17, 18 may include a pre-compounded rubber material, a polymer raw material, a filler such as carbon black, silica or a platy filler, a coupling agent, a tackifier resin, a reinforcing resin; a masterbatch material, a processing aid, an antioxidant, an antiozonant, a stearic acid, an activator, a wax, an oil, a sulfur vulcanizing agent, and a peptizing agent. Preferably, the fourth or fifth raw materials are materials needed to make a productive rubber compound out of the non-productive rubber compound fed into the multiple shaft extruder device 11' (i.e., one or more accelerators, sulfur and curing agent(s)).

The multiple shaft extruder device 11' mixes a rubber compound 5' which is extruded through the outlet of the multiple shaft extruder device 11'.

Figure 3 illustrates an embodiment of a mixing apparatus 10" for a continuous mixing suitable for use in making rubber compositions for tires or tire components. The continuous mixing apparatus 10" is again not limited to tire applications and may be used for example, to make other rubber components not related to tires such as conveyors, hoses or belts. The mixing apparatus 10" may again be located at the tire building machinery for direct application of the rubber composition to a tire building drum, to another tire building apparatus, or to a substrate in general.

The embodiment of Fig. 3 differs from the embodiment of Fig. 1 in that it comprises the first multiple shaft extruder device 11 of Fig. 1 and a second and third multiple shaft extruder device 11', 11" which may be of the same or a similar design as the first multiple shaft extruder device 11. The devices 11, 11', 11" operate in parallel. Each may mix a rubber compound separately using respective raw materials 21, 23, 24 fed into the respective inlets of the multiple shaft extruder devices 11, 11', 11" as explained above in the context of the first embodiment which are then extruded and brought together and collectively referred to in Fig. 3 as mixed rubber compound 5".

In this third embodiment, the mixed rubber compound 5" is preferably a non-productive compound.

Downstream of the apparatus 10", a further mixing device is provided to mix a productive compound. This device is a gear pump mixing device, or the multiple shaft mixing device 11 as shown in Fig. 1 or may be even a further apparatus 10, 10' comprising multiple shaft mixing devices 11, 11' as shown in Fig. 2 or Fig. 1.

Figure 4 illustrates a comparative example which is similar to the first embodiment and which illustrates the mixing apparatus 10 shown in Fig. 1 together with some further components for supplying raw materials, handling the extrudate and operating the overall apparatus. The mixing apparatus 10 shown in Fig. 4 can also include several multiple shaft extruder devices 11 (together with further components to feed raw materials into the various multiple shaft extruder devices 11 and to operate the respective system), i.e., the embodiment of Fig. 4 can be extended to an apparatus similar to Fig. 2 with multiple shaft extruder devices 11 operating in sequence or similar to Fig. 3 with multiple shaft extruder devices 11 operating in parallel. Even a combination of the arrangements in accordance with Fig. 2 and Fig. 3 is possible if required.

The mixing apparatus 10 of Fig. 4 comprises a multiple shaft extruder device 11 preferably having a design as basically shown in US-A-2006/0140048 (see in particular Figs. 1-4). It comprises an inlet 22, through which a first raw material in the form of a polymer raw material or a mixture of at least two different polymer raw materials may be fed into the multiple shaft extruder device 11. It further comprises an extruder 40 and a subsequent gear pump 42, a first additive pumping device 70 (which may include an extruder and a gear pump), an oil pump 60, a second additive pumping device 80 (which may include an extruder and a gear pump) and a third additive pumping device 90 (which may include an extruder and a gear pump). The extrudate of the multiple shaft extruder device 11 is fed into a gear pump 25 and applied to a green tire surface at a tire building station 95 using a shaping die 92. The apparatus 10 is operated with a computer controller 100 managing the overall mixing, extrusion and application process.

Using the extruder 40 and the gear pump 42, a rubber compound may be added to the multiple shaft extruder device 11. This rubber compound is preferably a non-productive rubber composition.

Oil may be optionally injected into the multiple shaft extruder device 11 via the oil pump 60 and/or at any other desired location to controls the viscosity of the compound mixture.

If more than one accelerator is used, they may be added into the mixture separately or together. For example, a primary accelerator and a secondary accelerator may both be added. Accelerators are used to control the time and/or temperature required for vulcanization and to improve the properties of the rubber. The accelerator may be in powder form or an encapsulated powder with a resin or rubber base. Examples of accelerator compositions are described in more detail below.

Other additives include a curative agent or precursor, which may also be added to the extruder 10 via additive pump 90. One example of a curative agent is sulfur. The sulfur may be added in solid form or an encapsulated powder with a resin or rubber base.

The gear pump 25 is preferably located adjacent to a tire building station 95 for direct application onto a core, tire blank buffed carcass for a retreaded tire or tire building drum. Gear pump 25 may include a nozzle or shaping die 92 which applies the compound formulation output from the gear pump 25 directly onto the tire building machine 95 in preferably continuous strips which are wound onto a tire building drum or core.

In addition to what is shown in Figs. 1 to 4, one, each, or several of the multiple shaft extruder devices 11, 11', 11" may be connected close to the respective outlet 12 of the multiple shaft extruder devices 11, 11', 11" to a vacuum pump device to remove water or alcohols such as ethanol from the respective mixed compound 5, 5', 5" prior to exiting the respective extruder device.

The following are compositions which may be used in conjunction with the present invention.

In one embodiment, a single accelerator system may be used in the rubber compound, i.e., a primary accelerator. The primary accelerator(s) may be used in total amounts ranging from 0.5 to 4.0, alternatively 0.8 to 1.5, phr. In another embodiment, combinations of a primary and a secondary accelerator might be used with the secondary accelerator being used in smaller amounts, such as from 0.05 to 3.00 phr, in order to activate and to improve the properties of the vulcanized rubber. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

Representative rubbers that may be used in the rubber compound include acrylonitrile/diene copolymers, natural rubber, liquid polymers as described in EP-B1-2065221, halogenated butyl rubber, butyl rubber, cis-1,4-polyisoprene, styrene-butadiene copolymers, cis-1,4-polybutadiene, styrene-isoprene-butadiene terpolymers ethylene-propylene terpolymers, also known as ethylene/propylene/diene monomer (EPDM), and in particular ethylene/propylene/dicyclopentadiene terpolymers. Mixtures of the above rubbers or functionalized rubbers may also be used. Preferably, the rubber is granulated or pelletized natural rubber, cis-1,4-polyisoprene, styrene-butadiene copolymers, or cis-1,4-polybutadiene.

The processes are particularly suitable for compounding highly filled batches by a single stage process. For instance, they allow it to obtain masterbatches directly from synthetic rubber polymerization (for example, for butyl rubber, polybutadiene rubber or styrene-butadiene rubber). In this case, the multiple shaft extruder device is preferably directly fed with rubber pieces or ground rubber (or mixtures of such rubber materials) obtained from the polymerization production. This avoids the compacting of manufactured rubber in bales. To produce a masterbatch, the multiple shaft extruder device is then also fed at one of its inlets, with one or more fillers, a coupling agent and additives if necessary (such as processing aids, anti-oxidants, and oil). In case of a coupling agent addition to the masterbatch, a coupling reaction between silica and coupling agent can be initiated.

The rubber compound may contain a platy filler. Representative examples of platy fillers include clay, mica and mixtures thereof. When used, the amount of platy filler ranges from 25 to 150 parts per 100 parts by weight of rubber (hereinafter referred to as phr). Preferably, the level of platy filler in the rubber compound ranges from 30 to 75 phr.

The various rubber compositions may be compounded with conventional rubber compounding ingredients. Conventional ingredients commonly used include carbon black, silica, coupling agents, tackifier resins, a reinforcing resin; processing aids, antioxidants, antiozonants, stearic acid, activators, waxes, oils, sulfur vulcanizing agents and peptizing agents. As known to those skilled in the art, depending on the desired degree of abrasion resistance and other properties, certain additives mentioned above are commonly used in conventional amounts. Typical additions of carbon black may be from 10 to 150 parts by weight of rubber, preferably 50 to 100 phr. Typical amounts of silica range from 10 to 250 parts by weight, preferably 30 to 130 parts by weight, and blends of silica and carbon black are also included. Typical amounts of tackifier resins comprise from 2 to 10 phr. Typical amounts of reinforcing resins comprise from 2 to 40 phr. Typical amounts of processing aids comprise 1 to 5 phr. Typical amounts of antioxidants comprise 1 to 10 phr. Typical amounts of antiozonants comprise 1 to 10 phr. Typical amounts of stearic acid comprise 0.50 to 3 phr. Typical amounts of accelerators comprise 1 to 5 phr. Typical amounts of waxes comprise 1 to 5 phr. Typical amounts of oils comprise 2 to 50 phr. Sulfur vulcanizing agents, such as elemental sulfur, amine disulfides, polymeric polysulfides, sulfur olefin adducts, and mixtures thereof, are used in an amount ranging from 0.2 to 12.0 phr. Typical amounts of peptizers comprise from 0.1 to 1 phr.

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

## Claims

1. A mixing apparatus for manufacturing a rubber compound, the mixing apparatus (10") comprising a plurality of multiple shaft extruder devices (11, 11', 11 ") each comprising a plurality of inlets for receiving a plurality of materials to be fed into the respective extruder device along the shaft of the multiple shaft extruder device (11, 11', 11"), the plurality of inlets including a first inlet being the inlet which is most distant from the outlet (12), wherein the inlets of the plurality of inlets are located at different respective distances with respect to the outlet (12), and an outlet (12) for discharging a mixed material extruded by the respective extruder device, and at least one further mixing device, wherein the multiple shaft extruder devices (11, 11', 11 ") are arranged to operate in parallel in such a way that operatively the extrudates of the plurality of multiple shaft extruder devices (11, 11', 11 ") are fed together into the inlet of the at least one further mixing device, and wherein the further mixing device is a gear pump mixing device or a multiple shaft mixing device.

2. The mixing apparatus of claim 1 wherein one, each or several of the multiple shaft extruder devices (11, 11', 11 ") are connected close to the respective outlet (12) of the multiple shaft extruder devices (11, 11', 11 ") to a vacuum pump device.

3. The mixing apparatus of claim 1 wherein each of the plurality of multiple shaft extruder devices (11, 11', 11 ") is a ring extruder device.

## Patentansprüche

1. Mischvorrichtung zur Herstellung einer Gummimischung, wobei die Mischvorrichtung (10") eine Vielzahl von Mehrfachwellenextrudervorrichtungen (11, 11', 11") umfasst, die jede eine Vielzahl von Einlässen umfassen zur Aufnahme einer Vielzahl von Materialien, die entlang der Welle der Mehrfachwellenextrudervorrichtung (11, 11', 11") in die betreffende Extrudervorrichtung einzuspeisen sind, wobei die Vielzahl von Einlässen einen ersten Einlass beinhaltet, welcher derjenige Einlass ist, der am weitesten von dem Auslass (12) entfernt ist, wobei die Einlässe der Vielzahl von Einlässen in verschiedenen jeweiligen Abständen in Bezug zu dem Auslass (12) angeordnet sind, und einen Auslass (12) zum Abführen eines von der betreffenden Extrudervorrichtung extrudierten gemischten Materials, und mindestens eine weitere Mischvorrichtung, wobei die Mehrfachwellenextrudervorrichtungen (11, 11', 11") so angeordnet sind, dass sie auf solche Weise parallel arbeiten, dass die Extrudate der Vielzahl von Mehrfachwellenextrudervorrichtungen (11, 11', 11") wirksam zusammen in den Einlass der mindestens einen weiteren Mischvorrichtung eingespeist werden, und wobei die weitere Mischvorrichtung eine Zahnradpumpen-Mischvorrichtung oder eine Mehrfachwellen-Mischvorrichtung ist.

2. Mischvorrichtung nach Anspruch 1, wobei eine, jede oder mehrere der Mehrfachwellenextrudervorrichtungen (11, 11', 11") dicht an dem jeweiligen Auslass (12) der Mehrfachwellenextrudervorrichtungen (11, 11', 11") mit einer Vakuumpumpenvorrichtung verbunden sind.

3. Mischvorrichtung nach Anspruch 1, wobei jede der Vielzahl von Mehrfachwellenextrudervorrichtungen (11, 11', 11") eine Ringextrudervorrichtung ist.

## Revendications

1. Appareil de mélange pour la préparation d'un composé de caoutchouc, l'appareil de mélange (10") comprenant plusieurs dispositifs d'extrusion à plusieurs arbres (11, 11', 11") comprenant chacun plusieurs entrées pour recevoir plusieurs matières d'alimentation dans le dispositif d'extrusion respectif le long de l'arbre du dispositif d'extrusion à plusieurs arbres (11, 11', 11"), lesdites plusieurs entrées englobant une première entrée, à savoir l'entrée qui est la plus distante de la sortie (12), dans lequel les entrées desdites plusieurs entrées sont disposées à des distances respectives différentes par rapport à la sortie (12) pour décharger une matière mélangée extrudée par le dispositif d'extrusion respectif, et au moins un dispositif de mélange supplémentaire, dans lequel les dispositifs d'extrusion à plusieurs arbres (11, 11', 11") sont disposées pour travailler en parallèle de telle façon que de manière opérationnelle les extrudats de plusieurs desdits dispositifs d'extrusion à plusieurs arbres (11, 11', 11") sont alimentés de manière conjointe dans l'entrée dudit au moins un dispositif de mélange supplémentaire, et dans lequel le dispositif de mélange supplémentaire et un dispositif de mélange sous la forme d'une pompe à engrenages ou un dispositif de mélange à plusieurs arbres.

2. Appareil de mélange selon la revendication 1, dans lequel un des dispositifs d'extrusion à plusieurs arbres (11, 11', 11"), chacun de ces derniers ou plusieurs d'entre eux sont reliés, à proximité de la sortie respective (12) des dispositifs d'extrusion à plusieurs arbres (11, 11', 1 1 "), un dispositif de pompage sous vide.

3. Appareil de mélange selon la revendication 1, dans lequel chacun desdits plusieurs dispositifs d'extrusion à plusieurs arbres (11, 11', 11") est un dispositif d'extrusion de configuration annulaire.
